# EUROPEAN PATENT SPECIFICATION

(11) **EP 2 579 132 B1**
(45) Date of publication and mention of the grant of the patent: **02.01.2019**
(21) Application number: 12184796.6
(22) Date of filing: 18.09.2012
(51) Int. Cl.: G06F 3/041, G06F 3/044, G06F 3/045

(54) **TOUCH PANEL AND MOBILE DEVICE WITH THE SAME**
BERÜHRUNGSTAFEL UND MOBILE ANZEIGEVORRICHTUNG DAMIT
ÉCRAN TACTILE ET DISPOSITIF MOBILE L'UTILISANT

(30) Priority: 05.10.2011 KR 20110101305
(43) Date of publication of application: 10.04.2013
(73) Proprietor: Samsung Electronics Co., Ltd., Suwon-si, Gyeonggi-do, 443-742 (KR)
(72) Inventor: Min, Ung Ki, 443-742 Gyeonggi-do (KR)
(74) Representative: Hylarides, Paul Jacques

(56) References cited:
- EP-A2- 2 333 649
- WO-A2-2004/112448
- JP-A- 2008 009 054
- US-A1- 2009 267 916
- US-A1- 2010 066 650
- US-A1- 2011 109 583

## Description

### BACKGROUND OF THE INVENTION

### 1. Field of the Invention:

The present invention relates to a touch panel and a mobile device with the panel. More particularly, the present invention relates to a touch panel and a mobile device that includes an electrode plate and connection patterns.

### 2. Description of the Related Art:

Mobile devices are designed to include a variety of functions and allow the user to enjoy them and the combined functions thereof. They also include various types of input units, such as keyboards, mouse devices, etc., that users operate to execute corresponding functions. However, the input units make the mobile devices less portable, and their added bulk greatly inconveniences the user. To resolve this problem, conventional mobile devices have been developed to include touch screens instead of mouse devices or keyboards for example. A touch screen includes a display panel for displaying a video via light and a Touch Screen Panel (TSP), attached to the display panel, for sensing the user's touches. The TSP allows for the penetration of light in the center portion and blocks light in the margins, defining a video display area of the touch screen. Mobile devices display videos, sense user's touches via the touch screen, and perform corresponding functions.

The TSP forms a signal transmission pattern in the margins, i.e., around the video display area (see e.g. EP2333649, JP2008009054 or US2011109583). This placement of the signal transmission pattern in the margins causes difficulty in reducing the margins of the touch screen. That is, this configuration causes the touch screen to have difficulty maintaining the size of the mobile device, while also enlarging the video display area. In this regard document US2009267916 discloses on single layer touch panel where wiring is done mostly inside the sensor field.

Therefore, a need exists for an improved mobile device or a touch panel that enlarges a video display area and reduces the margins of the screen, while maintaining or reducing the overall size of the mobile device.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a touch panel where the margins are minimized according to the features of independent claim 1. The invention further provides a touch screen where the video display area is maximized.

In accordance with an aspect of the present invention, a mobile device is provided. The mobile device includes a display panel for displaying a video via light, and a touch panel, installed to the display panel, for passing through the light and sensing touches according to the features of independent claim 1.

Other aspects, advantages, and salient features of the invention will become apparent to those skilled in the art from the following detailed description, which, taken in conjunction with the annexed drawings, discloses exemplary embodiments and examples not covered by the claims of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a perspective view showing a mobile device according to an exemplary embodiment of the present invention;
FIG. 2 illustrates an exploded perspective view showing a mobile device according to an exemplary embodiment of the present invention;
FIG. 3 illustrates a cross-sectional view showing a touch panel according to an exemplary embodiment of the present invention;
FIG. 4 illustrates a top view showing an example of an electrode plate
FIGs. 5A and 5B illustrate detailed views showing the example of an electrode plate
FIG. 6 illustrates a top view showing an embodiment of an electrode plate according to the present invention; and
FIGs. 7A and 7B illustrate detailed views showing the embodiment of an electrode plate according to the present invention.
Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and and examples not covered by the claims. It includes various specific details to assist in that understanding but these are to be regarded as merely exemplary. Accordingly, those of ordinary skill in the art will recognize that various changes and modifications of the embodiments described herein can be made In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristics, parameter, or value need not be achieved exactly, but that deviations or variations, including, for example, tolerances, measurement error, measurement accuracy limitations and other factors known to those of skill in the art, may occur in amounts that do not preclude the effect the characteristic was intended to provide.

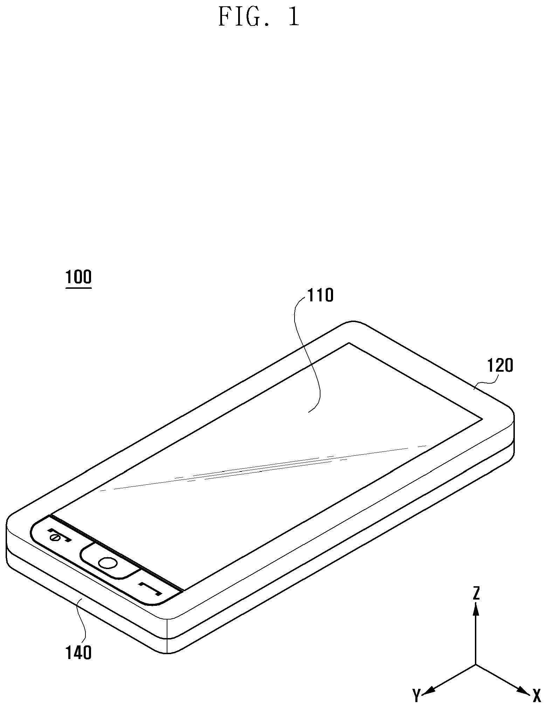

FIGs. 1 through 7B, discussed below, and the various exemplary embodiments used to describe the principles of the present disclosure in this patent documents are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

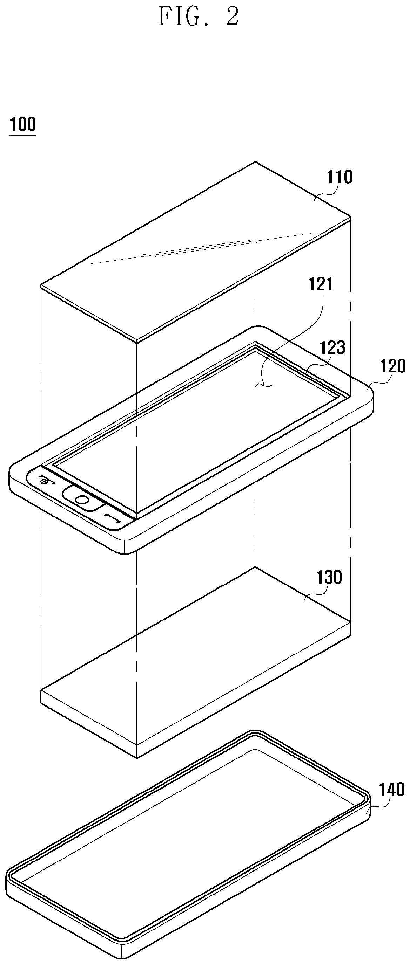

FIG. 1 illustrates a perspective view showing a mobile device according to an exemplary embodiment of the present invention and FIG. 2 illustrates an exploded perspective view showing a mobile device according to an exemplary embodiment of the present invention. In the following exemplary embodiments, the mobile device will be described based on a mobile phone.

Referring to FIGs. 1 and 2, the mobile device 100 is designed to include a touch panel 110, a cover chassis 120, a display panel 130, and a panel bracket 140.

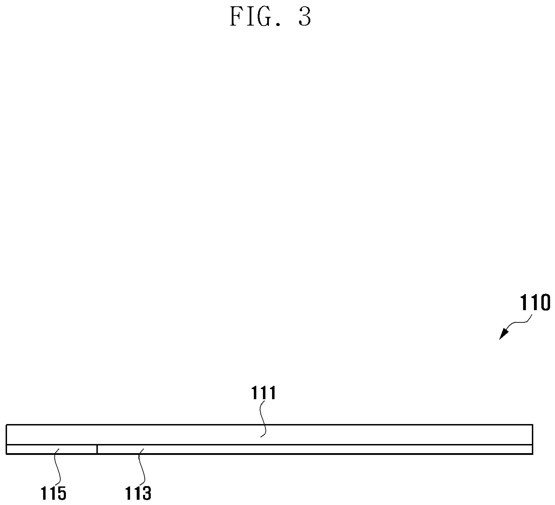

The touch panel 110 protects the components in the mobile device 100. The touch panel 110 senses a user's touches created thereon. The touch panel 110 may be implemented with resistive type sensors, capacitive type sensors, or pressure type sensors. The touch panel 110 will be described in detail later referring to FIG. 3.

The cover chassis 120 protects the components in the mobile device 100, together with the touch panel 110. The cover chassis 120 is designed along at least one edge of the mobile device 100 to protect the components therein. The cover chassis 120 is made of synthetic resins. Alternatively, the cover chassis 120 may be made of metal, such as stainless steel, titanium (Ti), etc. The cover chassis 120 is shaped as a frame with a hole 121 for receiving the touch panel 110. The cover chassis 120 forms a receipt stopper 123 around the receiving hole 121. The receipt stopper 123 protrudes toward the center of the receiving hole 121. The receipt stopper 123 holds the touch panel 110 in the receiving hole 121, opposite to the direction of receiving the display panel 130.

The display panel 130 displays videos when the mobile device 100 operates. The display panel 130 is fitted into the receiving hole 121, opposite the direction of receiving the touch panel 110. The display panel 130 is protected by the touch panel 110 and the cover chassis 120.

The display panel 130 may be provided as a Liquid Crystal Display (LCD). In this case, the display panel 130 may include a controller for controlling the LCD, a video memory in which image data is stored and an LCD element. If the LCD is provided as a touch screen, the display panel 130 may perform a part or all of the functions of an input unit. The display panel 130 may also include a Back Light Unit (BLU). Although it is not shown in the drawings, the display panel 130 further includes a panel suspension, a light providing module, and a display module which are stacked in order as listed.

The light providing module outputs light. The light providing module may be implemented with a BLU. The light providing module includes a light source and a light guide plate. The light source creates and outputs light. The light source may be implemented with a linear light source, such as a Cold Cathode Fluorescent Lamp (CCFL), a Hot Fluorescent Lamp (HCFL), etc., or a point light source, such as a LED. The light guide plate transfers from the light source to the display module. The light guide plate may be made of transparent materials such as a series of plastic, such as acrylic, etc.

The display module is installed onto the light providing module. The display module may be an LCD. The display module includes an Active Area (AA) and a Black Matrix (BM). The active area corresponds to the central portion in the display module. The active area allows for the transmission of light from the light providing module and displays videos via light passing therethrough. The black matrix corresponds to the regions around the active area and is arranged around the margins of the display module. The black matrix blocks light, thereby defining the active area in the display module. The display module includes a lower polarizer, a lower glass substrate, an upper glass substrate, an upper polarizer, and a Liquid Crystal (LC) layer.

The lower polarizer is placed on the upper side of the light providing module. The lower polarizer passes light of a specific polarization from among light from the light providing module, and absorbs or blocks waves of other polarizations.

The lower glass substrate is placed on the upper side of the lower polarizer. The lower glass substrate controls the transmission of light from a light guide panel. To this end, the lower glass substrate alters the arrangement of LC in the LC layer, thereby controlling the polarization of light transmitting from the lower polarizer. The lower glass substrate may be implemented with a substrate on which Thin Film Transistors (TFTs) are formed.

The upper glass substrate is placed above the upper side of the lower glass substrate. The upper glass substrate allows the light passing through the LC layer to be transmitted in color. To this end, the upper glass substrate may be implemented with a color filter. The upper glass substrate includes a number of pixels, red-, green-, and blue- pixels that create light in color.

The upper polarizer is placed on the upper glass substrate. In that case, the display panel 130 is coupled to the touch panel 110 and the cover chassis 120. The upper polarizer allows for the transmission of light from the upper glass substrate. The upper polarizer passes light of a specific polarization, from among light incident to the mobile device 100, and absorbs or blocks waves of other polarizations.

The LC layer is formed in the space between the lower and upper glass substrates as the space fills with LC. When a certain level of voltage is applied to the lower and upper glass substrates, electric fields are formed in the LC layer. The arrangement of LC is altered according to the strength of the electric fields and accordingly reflects a specific wavelength of light.

The panel suspension is installed onto the lower surface of the light providing module and supports it. The panel suspension supplements the strength of the display panel 130. The panel suspension receives and protects the light providing module and the display module.

The panel bracket 140 fixes the components in the mobile device 100. The panel bracket 140 receives and fixes the display panel 130. The panel bracket 140 protects the components of the mobile device 100, together with the touch panel 110 and the cover chassis 120. The panel bracket 140 is shaped, in at least one direction of the mobile device 100, to protect the components of the mobile device 100.
The members described above, i.e., the touch panel 110, the cover chassis 120 and the panel bracket 140, form a space in the mobile device 100, and the display panel 130 is placed into the space.

Although it is not shown in the drawings, a cover adhesive sheet may be further included in the mobile device 100. The cover adhesive sheet couples the components in the mobile device 100 to each other. For example, the cover adhesive sheet is inserted between the touch panel 110, the cover chassis 120 and the display panel 130, by coupling them to each other. In an embodiment of the invention, the cover adhesive sheet may be formed as a frame shape of adhesive tape, e.g., an Optical Clear Adhesive (OCA), a Super View Resin (SVR), etc.

FIG. 3 illustrates a cross-sectional view showing a touch panel according to an exemplary embodiment of the present invention.

Referring to FIG. 3, a touch panel 110 includes a cover window 111, an electrode plate 113 and a main board 115.
The cover window 111 is exposed to the outside from the mobile device 100. The cover window 111 allows for a user's touches thereon. The cover window 111 passes through the light from the inside of the mobile device 100 to the outside. The cover window 111 also passes through light incident thereon, from the outside of the mobile device 100, to the inside.

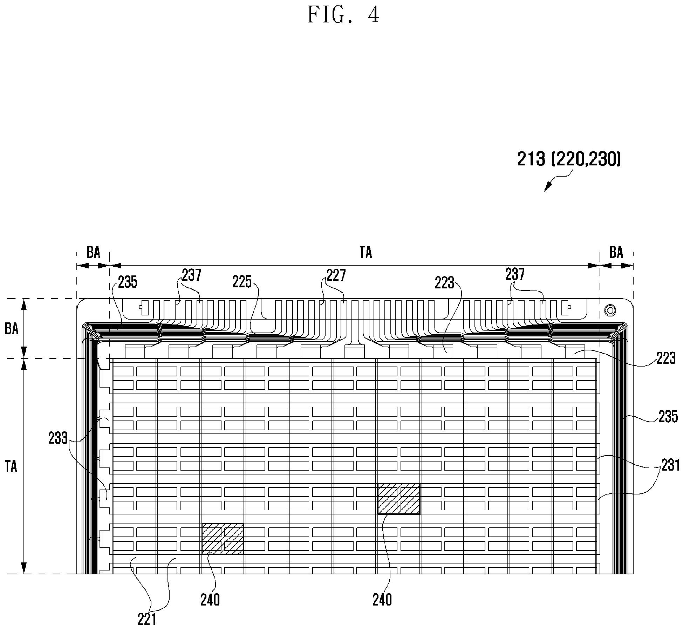

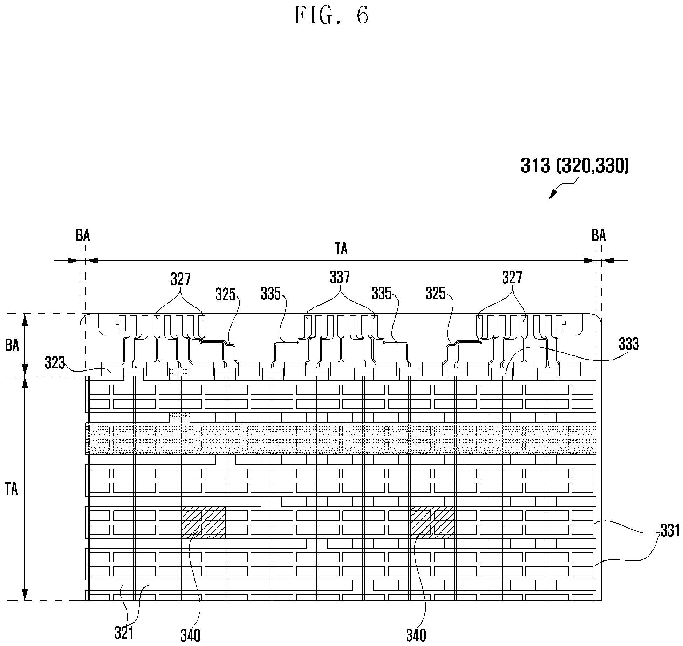

The electrode plate 113 is adhered onto the lower side of the cover window 111. The electrode plate 113 may be a transparent conductive film of electric conductivity, e.g., Indium Tin Oxide (ITO) or Indium Zinc Oxide (IZO). The electrode plate 113 includes a Transmission Area (TA) and a Block Area (BA). The TA corresponds to a central region in the electrode plate 113. The electrode plate 113 passes light created in the mobile device 100 through the TA to the outside of the mobile device 100. The electrode plate 113 also passes light incident onto the mobile device 100 through the TA to the inside of the mobile device 100. In the TA, the physical quantity, e.g., resistance, capacitance, etc., is altered according to the contact area on the cover window 111. The BA corresponds to a region around the TA and is arranged in the margin of the electrode plate 113. The electrode plate 113 blocks light via the BA. The TA is defined by the BA. Examples of the electrode plate 113 are described in detail later referring to FIGs. 4 and 6.

The main board 115 is installed onto the lower side of the cover window 111 at one side of the electrode plate 113. The main board 115 may be a Flexible Printed Circuit Board (FPCB). The main board 115 is electrically connected to the electrode plate 113. The main board 115 includes a number of connection terminals (not shown). The connection terminals are arrayed along the edge of the main board 115, adjacent to the electrode plate 113. The connection terminals may also extend to the outside from the main board 115, so that they can be inserted into the electrode plate 113. The main board 115 senses a user's touch when the physical quantity is altered on the electrode plate 113. In that case, the main board 115 detects the coordinates of the location where the touch is created on the electrode plate 113.

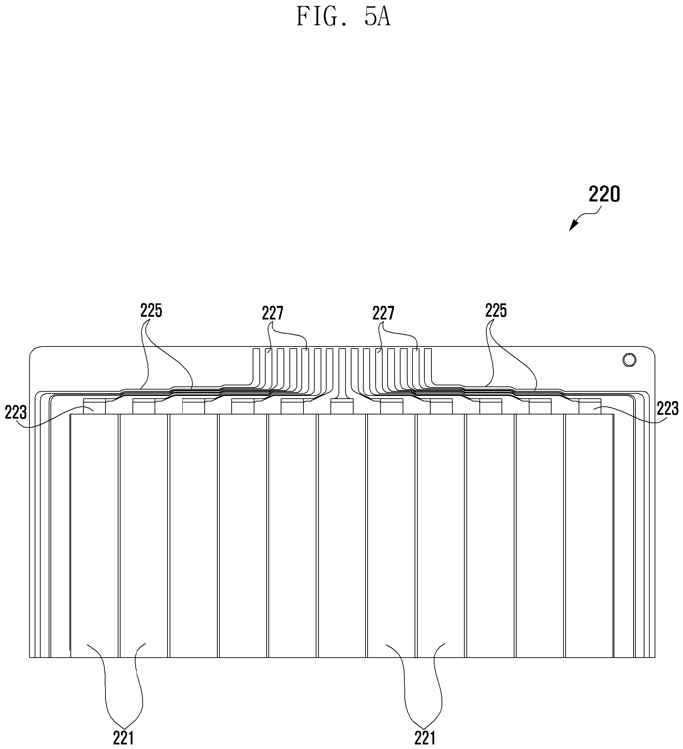

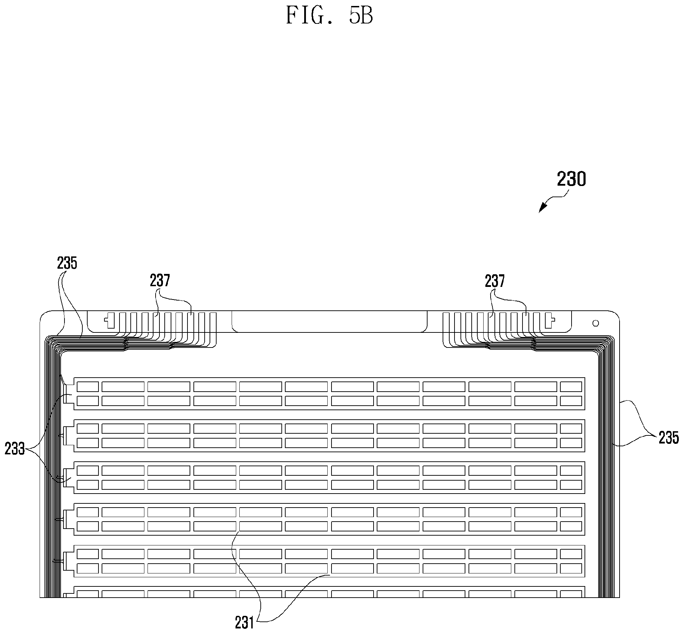

FIG. 4 illustrates a top view showing an example of an electrode plate. FIGs. 5A and 5B illustrate detailed views showing the example of an electrode plate. In the example, it is assumed that the horizontal and vertical directions represent the X- and Y-axes respectively.

Referring to FIG. 4, the electrode plate 213 includes the vertical electrode plate (V-electrode plate) 220 and the horizontal electrode plate (H-electrode plate) 230, which are stacked in such a way that one lies on top of the other. For example, the V-electrode plate 220 may be stacked on the H-electrode plate 230 or vice versa.
The V-electrode plate 220 determines the location coordinates corresponding to the horizontal direction in the electrode plate 213. As shown in FIG. 5A, the V-electrode plate 220 includes a number of vertical electrode patterns 221 and a number of vertical connection patterns 225.
The vertical electrode patterns 221 are arrayed in the TA of the V-electrode plate 220. The vertical electrode patterns 221 extend in the vertical direction and are arrayed in parallel adjacent to each other in the horizontal direction. Each of the vertical electrode patterns 221 has a vertical contact terminal 223 at one-end side, respectively. The vertical contact terminal 223 is protruded from the end of the vertical electrode pattern 221 in the vertical direction with respect to one side of the V-electrode plate 220.

The vertical connection patterns 225 are arrayed in the BA of the V-electrode plate 220. The vertical connection patterns 225 extend from the vertical electrode patterns 221 to the one side of the V-electrode plate 220. Each vertical connection pattern 225 extends from each vertical electrode pattern 221. The vertical connection pattern 225 contacts the vertical contact terminal 223 and extends to one side of the V-electrode plate 220. That is, the vertical connection pattern 225 extends in the vertical direction. The vertical connection patterns 225 form vertical connection terminals 227 in the BA, corresponding to one side of the V-electrode plate 220. The vertical connection patterns 225 form the vertical connection terminals 227 respectively. The vertical connection terminals 227 are arrayed densely in the central portion of the BA, corresponding to one side of the electrode plate 213. The vertical connection terminals 227 are arrayed in parallel in the BA of the electrode plate 213. The vertical connection terminals 227 may be exposed to the outside from the electrode plate 213, and also connected to the contact terminals of the main board (115 shown in FIG. 3).

The H-electrode plate 230 determines the location coordinates corresponding to the vertical direction in the electrode plate 213. As shown in FIG. 5B, the H-electrode plate 230 includes a number of horizontal electrode patterns 231 and a number of horizontal connection patterns 235.
The horizontal electrode patterns 231 are arrayed in the TA of the H-electrode plate 230. The horizontal electrode patterns 231 extend in the horizontal direction and are arrayed in parallel adjacent to each other in the vertical direction. The horizontal electrode patterns 231 have horizontal contact terminals 233 at the one-end sides, respectively. The horizontal contact terminal 233 is protruded from one of the opposite sides of the horizontal electrode pattern 231 in the horizontal direction.

The horizontal connection patterns 235 are arrayed in the BA of the H-electrode plate 230. The horizontal connection patterns 235 extend from the horizontal electrode patterns 231 to one side of the H-electrode plate 230. Each horizontal connection pattern 235 extends from each horizontal electrode pattern 231. The horizontal connection pattern 235 contacts the horizontal contact terminal 233 of the one end of the horizontal electrode pattern 231. The horizontal connection pattern 235 extends to one side of the H-electrode plate 230, through the BA, via the one end of the horizontal electrode pattern 231. That is, the horizontal connection pattern 235 extends in the horizontal direction and then in the vertical direction. The horizontal connection patterns 235 form horizontal connection terminals 237 in the BA, corresponding to one side of the H-electrode plate 230. The horizontal connection patterns 235 form the horizontal connection terminals 237 respectively. The horizontal connection terminals 237 are arrayed densely in both opposite sides of the BA corresponding to one side of the electrode plate 213. The horizontal connection terminals 237 are arrayed in parallel in the BA of the electrode plate 213. The horizontal connection terminals 237 may be exposed to the outside from the electrode plate 213, and also connected to the contact terminals of the main board (115 shown in FIG. 3).

The V-electrode plate 220 and H-electrode plate 230, configured as described above, are stacked in such a way that one lies on top of the other, thereby implementing the electrode plate 213 according to the example. The electrode plate 213 forms a number of electrodes 240 where the vertical electrode patterns 221 and the horizontal electrode patterns 231 cross each other. That is, the electrode plate 213 includes the electrodes 240 arrayed in the grid. The vertical connection patterns 225 and the horizontal connection patterns 235 are extended from the electrodes 240 via respective paths, and form the vertical connection terminals 227 and the horizontal connection terminals 237 in one side of the electrode plate 213. The vertical connection patterns 225 and the horizontal connection patterns 235 are arrayed so that they cannot be superimposed. The vertical contact terminals 223 of the vertical electrode patterns 221 and the horizontal contact terminals 233 of the horizontal electrode patterns 231 are protruded in different directions, and this configuration determines the extension paths of the vertical connection patterns 225 and the horizontal connection patterns 235. The vertical connection terminals 227 and the horizontal connection terminals 237 are densely arrayed in the center portion and in both opposite sides of the BA corresponding to one side of the electrode plate 213, respectively.

In the operation, when a touch event occurs on the cover window 111 shown in FIG. 3, the physical quantity is altered in at least one of the electrodes 240 of the electrode plate 213. In that case, an electrical signal according to the alteration in the physical quantity is transferred to the main board 115 via the vertical connection pattern 225 extended from at least one of the vertical electrode patterns 221. Simultaneously, the electrical signal according to the alteration in the physical quantity is also transferred to the main board 115 via the horizontal connection pattern 235 extended from at least one of the horizontal electrode patterns 231. The main board 115 receives the electrical signals via contact terminals connected to the vertical connection pattern 225 and the horizontal connection pattern 235, and thus detects the coordinates of the location where the touch event occurred.

In the example described above, although the electrode plate 213 is implemented in such a way that the horizontal connection patterns 235 extend through the BA located at both ends of the horizontal electrode patterns 231, it should be understood that the example is not limited to that. In order to achieve the example, the electrode plate 213 needs to secure space in the BA so that it can allow for the extension of the horizontal connection patterns 235. In that case, the electrode plate 213 has a problem in that the BA cannot be reduced. In addition, another problem is created as it is difficult to maintain the size of the electrode plate 213 and to enlarge the TA.

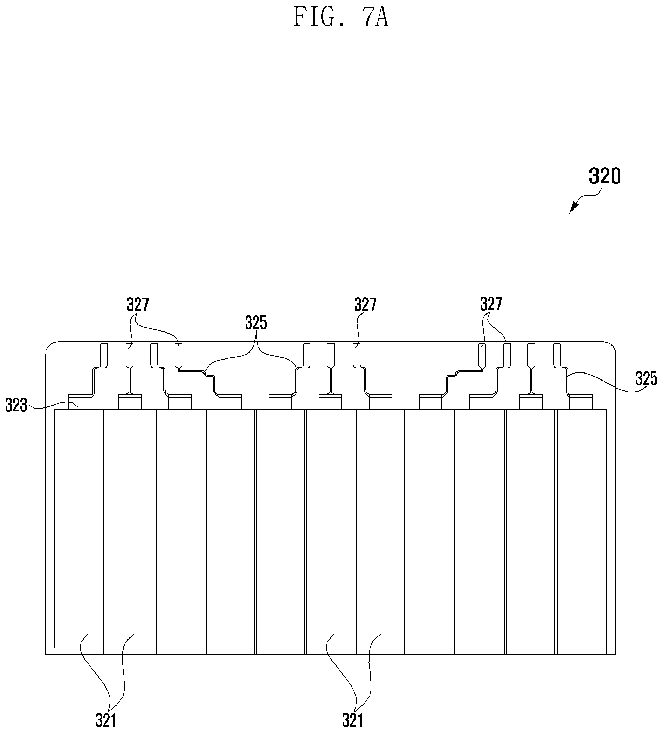

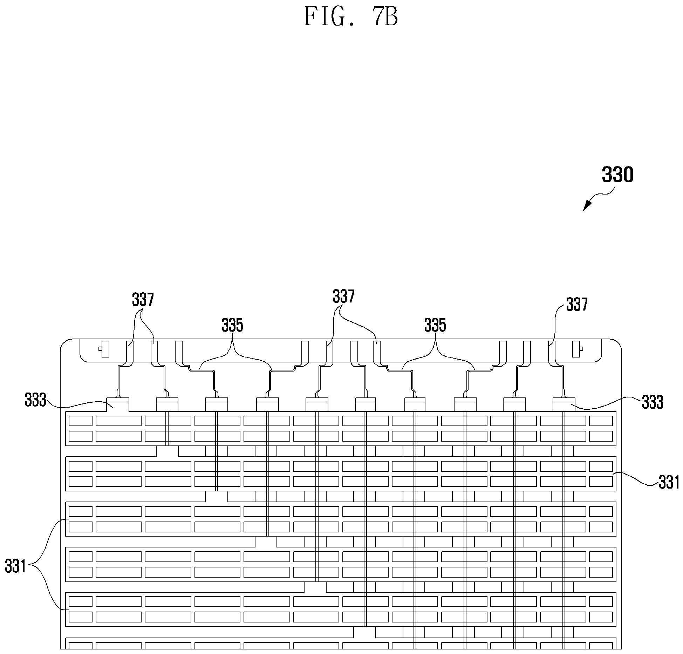

FIG. 6 illustrates a top view showing an embodiment of an electrode plate according to the present invention. FIGs. 7A and 7B illustrate detailed views showing the embodiment of an electrode plate according to the present invention. In the embodiment, it is assumed that the horizontal and vertical directions represent the X- and Y-axes respectively.

Referring to FIG. 6, the electrode plate 313 includes the vertical electrode plate (V-electrode plate) 320 and the horizontal electrode plate (H-electrode plate) 330, which are stacked in such a way that one lies on top of the other. For example, the V-electrode plate 320 may be stacked on the H-electrode plate 330 or vice versa.

The V-electrode plate 320 determines the location coordinates corresponding to the horizontal direction in the electrode plate 313. As shown in FIG. 7A, the V-electrode plate 320 includes a number of vertical electrode patterns 321 and a number of vertical connection patterns 325.
The vertical electrode patterns 321 are arrayed in the TA of the V-electrode plate 320. The vertical electrode patterns 321 extend in the vertical direction and are arrayed in parallel adjacent to each other in the horizontal direction. The vertical electrode patterns 321 have vertical contact terminals 323, respectively. The vertical contact terminal 323 is protruded from the vertical electrode pattern 321 in the vertical direction with respect to one side of the V-electrode plate 320.

The vertical connection patterns 325 are arrayed in the BA corresponding to one side of the V-electrode plate 320. The vertical connection patterns 325 extend from the vertical electrode patterns 321 to one side of the V-electrode plate 320. Each vertical connection pattern 325 extends from each vertical electrode pattern 321. The vertical connection pattern 325 contacts the vertical contact terminal 323 and extends to one side of the V-electrode plate 320. The vertical connection patterns 325 form vertical connection terminals 327 in the BA corresponding to one side of the V-electrode plate 320, respectively. The vertical connection terminals 327 are spaced apart from each other, over a certain distance, in the BA corresponding to one side of the electrode plate 313. The vertical connection terminals 327 are arrayed in parallel in the BA of the electrode plate 313. The vertical connection terminals 327 may be exposed to the outside from the electrode plate 313, and also connected to the contact terminals of the main board (115 shown in FIG. 3).

The H-electrode plate 330 determines the location coordinates corresponding to the vertical direction in the electrode plate 313. As shown in FIG. 7B, the H-electrode plate 330 includes a number of horizontal electrode patterns 331 and a number of horizontal connection patterns 335.
The horizontal electrode patterns 331 are arrayed in the TA of the H-electrode plate 330. The horizontal electrode patterns 331 extend in the horizontal direction and are arrayed in parallel adjacent to each other in the vertical direction. The horizontal electrode patterns 331 have horizontal contact terminals 333, respectively. The horizontal contact terminal 333 is protruded from one of the opposite portions of the horizontal electrode pattern 331 in the vertical direction. Since the horizontal contact terminals 333 are arrayed and extended in different directions from the extension direction of the horizontal electrode patterns 331, they are protruded from the horizontal electrode patterns 331 in different lengths and arrayed in parallel. The horizontal contact terminals 333 are designed in the bridge configure, so that at least one of the horizontal electrode patterns 331 extends to the opposite side. That is, the horizontal contact terminals 333 extend so that they cannot contact the horizontal electrode patterns 331, thereby arraying in parallel with respect to the other horizontal contact terminals. This configuration prevents interference between the horizontal electrode patterns 331.

The horizontal connection patterns 335 are arrayed in the BA corresponding to one side of the H-electrode plate 330. The horizontal connection patterns 335 extend from the horizontal electrode patterns 331 to one side of the H-electrode plate 330. Each horizontal connection pattern 335 extends from each horizontal electrode pattern 331. The horizontal connection pattern 335 contacts the horizontal contact terminal 333 and extends to one side of the H-electrode plate 330. The horizontal connection patterns 335 form horizontal connection terminals 337 in the BA corresponding to one side of the H-electrode plate 330, respectively. The horizontal connection terminals 337 are spaced apart from each other, over a certain distance, in the BA corresponding to one side of the electrode plate 313. The horizontal connection terminals 337 are arrayed in parallel in the BA of the electrode plate 313. The horizontal connection terminals 337 may be exposed to the outside from the electrode plate 313, and also connected to the contact terminals of the main board (115 shown in FIG. 3) .

The V-electrode plate 320 and H-electrode plate 330, configured as described above, are stacked in such a way that one lies on top of the other, thereby implementing the electrode plate 313 according to the embodiment of the invention. The electrode plate 313 forms a number of electrodes 340 where the vertical electrode patterns 321 and the horizontal electrode patterns 331 cross each other. That is, the electrode plate 313 includes the electrodes 340 arrayed in the grid. The vertical connection patterns 325 and the horizontal connection patterns 335 are extended from the electrodes 340 via respective paths, and form the vertical connection terminals 327 and the horizontal connection terminals 337 in the one side of the electrode plate 313. The vertical contact terminals 323 of the vertical electrode patterns 321 and the horizontal contact terminals 333 of the horizontal electrode patterns 331 are protruded in the same direction, and this configuration determines the extension paths of the vertical connection patterns 325 and the horizontal connection patterns 335. That is, the vertical connection patterns 325 and the horizontal connection patterns 335 extend in the same direction, forming respective extension paths.

Referring to FIG. 6, the vertical contact terminals 323 and the horizontal contact terminals 333 are arrayed alternatively in the horizontal direction in the electrode plate 313. That is, the horizontal contact terminals 333 are arrayed between the vertical contact terminals 323, or the vertical contact terminals 323 are arrayed between the horizontal contact terminals 333. The vertical connection patterns 325 and the horizontal connection patterns 335 are arrayed in the BA corresponding to one side of the electrode plate 313 so that they cannot be superimposed. That is, the horizontal connection patterns 335 are extended between the vertical connection patterns 325, or the vertical connection patterns 325 are extended between the horizontal connection patterns 335. In addition, the vertical connection terminals 327 in groups and the horizontal connection terminals 337 in groups are alternatively arrayed in the BA corresponding to one side of the electrode plate 313. That is, the groups of horizontal connection terminals 337 are arrayed between the groups of vertical connection terminals 327 or the groups of vertical connection terminals 327 are arrayed between the groups of horizontal connection terminals 337.

In the operation, when a touch event occurs on the cover window 111 shown in FIG. 3, the physical quantity is altered in at least one of the electrodes 340 of the electrode plate 313. That is, the alteration in the physical quantity is sensed via at least one of the vertical electrode patterns 321 and at least one of the horizontal electrode patterns 331. In that case, an electrical signal according to the alteration in the physical quantity is transferred to the main board 115 via the vertical connection pattern 325, extended from the vertical electrode pattern 321, and the horizontal connection pattern 335 extended from the horizontal electrode pattern 331. The main board 115 receives the electrical signals via contact terminals connected to the vertical connection patterns 325 and the horizontal connection patterns 335, and thus detects the coordinates of the location where the touch event occurred.

In the embodiment described above, the electrode plate 313 is implemented in such a way that the vertical connection patterns 325 and the horizontal connection patterns 335 extend in the same direction, so that the BA can be reduced. That is, since the horizontal connection patterns 335 are extended to one side of the electrode plate 313 corresponding to the main board 115 without passing through the BA located in both the end portions of the horizontal connection patterns 335, this configuration means the electrode plate 313 does not require the BA. Therefore, the electrode plate 313 can reduce the BA located in both the end portions of the horizontal connection patterns 335 or remove it, while maintaining the TA. The electrode plate 313 and the touch panel 110 can also minimize the BA. The electrode plate 313 and the touch panel 110 can also maximize the TA, while maintaining their size.

In the foregoing description, although the embodiments are described on the basis of X- and Y-axes referring to the horizontal and vertical directions respectively, it should be understood that the invention is not limited to the directions. For example, the embodiments may also be described by defining the horizontal and vertical directions as Y- and X-axes respectively. In addition, the plane formed by the X- and Y-axes may be parallel to or perpendicular to the drawing paper.

As described above, the touch panel and the mobile device with the panel, according to the invention, can reduce the electrode plate where the connection patterns extend from an electrode in the same direction, i.e., a single direction. Since the connection patterns extend without passing through the margins of the electrode plate, the electrode plate can be designed to reduce the margins, and this makes it possible to reduce the touch panel. This reduction in components can reduce the size of the mobile device.

While the invention has been shown and described with reference to certain exemplary embodiments thereof, it will be understood by those skilled in the art that various changes in form and details may be made therein without departing from the scope of the invention as defined by the appended claims.

## Claims

1. A touch panel comprising:
an electrode plate (313) including a horizontal electrode plate (330) on which a plurality of horizontal electrode patterns (331) are formed that extend in a horizontal direction and are arrayed in a vertical direction and a vertical electrode plate (320) on which a plurality of vertical electrode patterns (321) are that extend in the vertical direction and are arrayed in the horizontal direction and
a plurality of connection patterns (325, 335) including a plurality of horizontal connection patterns (335) that extend from the plurality of horizontal electrode patterns (331) in a same direction in the horizontal electrode plate (330) and a plurality of vertical connection patterns (325) that extend from the plurality of vertical electrode patterns (321) in the same direction as the plurality of horizontal connection patterns (335) in the vertical electrode plate (320),
wherein the plurality of horizontal electrode patterns (331) and the plurality of vertical electrode patterns (321) further comprise a plurality of contact terminals (323, 333), respectively, that extend to be exposed to the outside of the plurality of horizontal electrode patterns (331) and the plurality of vertical electrode patterns (321) in the same direction whereby the horizontal contact terminals (333) are protruded from one of the opposite portions of the horizontal electrode pattern (331) in the vertical direction and extend so that they cannot contact the horizontal electrode patterns (331) and connect to the plurality of horizontal connection patterns (335) and the plurality of vertical connection patterns (325) via the plurality of contact terminals (323,333) respectively.

2. The touch panel of claim 1, wherein: a plurality of electrodes are created where the plurality of horizontal electrode patterns (331) and the plurality of vertical electrode patterns (321) cross each other.

3. The touch panel of claim 2,
wherein the plurality of horizontal connection patterns (335) and the plurality of vertical connection patterns (325) are arrayed alternatively and respectively.

4. The touch panel of claim 1, wherein, when the plurality of horizontal electrode patterns (331) extend in a different direction from the same direction, the plurality of contact terminals (333) extend from the plurality of horizontal electrode patterns (331) to an opposite direction with respect to at least one of the plurality of horizontal electrode patterns (331).

5. The touch panel of claim 4, wherein, when the plurality of vertical electrode patterns (321) extend in the same direction, the plurality of contact terminals (323) extend from the plurality of vertical electrode patterns (321) to a same direction with respect to at least one of the plurality of vertical electrode patterns.

6. The touch panel of any of claims,
wherein the horizontal electrode plate (320) and the vertical electrode plate (330) are stacked in such a way that one lies on top of the other.

7. The touch panel of any of the preceding claims, further comprising:
a main board for sensing touches via at least one of the plurality of horizontal electrode patterns (331) and the plurality of vertical electrode patterns (321), the main board connecting to the plurality of horizontal connection patterns (335) and the plurality of vertical connection patterns (325) in the same direction.

8. The touch panel of claim 3, wherein the plurality of horizontal connection patterns (335) and the plurality of vertical connection patterns (325) are arrayed alternatively and respectively so that the plurality of horizontal connection patterns (335) are respectively extended between the plurality of vertical connection patterns (325), and vice-versa.

9. The touch panel of claim 3, wherein the plurality of contact terminals further comprise:
a plurality of vertical contact terminals (323) that extend from the plurality of vertical electrode patterns (321); and
a plurality of horizontal contact terminals (333) that extend from the plurality of horizontal electrode patterns (331).

10. The touch panel of claim 10, wherein the plurality of vertical contact terminals (323) are respectively arrayed between the plurality of horizontal contact terminals (333), and vice-versa.

11. The touch panel of claim 10 wherein the plurality of connection patterns (325,335) further comprise a group of connection terminals (327,337), wherein the group of connection terminals comprise a group of vertical connection terminals (327), and a group of horizontal connection terminals (337), and wherein the group of the vertical connection terminals (327) are respectively arranged between the group of the horizontal connection terminals (337), and vice-versa.

12. A mobile device comprising:
a display panel for displaying a video via light; and
a touch panel according to any of the preceding claims, installed to the display panel, for passing through the light and sensing touches.

## Patentansprüche

1. Berührungstafel, die umfasst:
einen Elektrodenplatte (313) umfassend eine Platte (330) mit horizontalen Elektroden, auf der eine Mehrzahl von horizontalen Elektrodenmustern (331) ausgeformt ist, die sich in einer horizontalen Richtung erstrecken und in einer vertikalen Richtung angeordnet sind, sowie eine Platte (320) mit vertikalen Elektroden, auf der eine Mehrzahl von vertikalen Elektrodenmuster (321) sich in einer vertikalen Richtung erstrecken und in einer horizontalen Richtung angeordnet sind, und
eine Mehrzahl von Verbindungsmustern (325, 335) umfassend eine Mehrzahl von horizontalen Verbindungsmustern (335), die sich von der Mehrzahl von horizontalen Elektrodenmustern (331) in der selben Richtung in der Platte (330) mit horizontalen Elektroden erstreckt, sowie eine Mehrzahl von vertikalen Verbindungsmustern (325), die sich von der Mehrzahl von vertikalen Elektrodenmustern (321) in der selben Richtung wie die Mehrzahl von horizontalen Verbindungsplatten (335) in der Platte (320) mit vertikalen Elektroden erstreckt,
wobei die Mehrzahl von horizontalen Elektrodenmustern (331) und die Mehrzahl von vertikalen Elektrodenmustern (321) jeweils weiterhin eine Mehrzahl von Kontaktanschlüssen (323, 333) umfassen, die sich derart erstrecken, dass sie zu der Außenseite der Mehrzahl von horizontalen Elektrodenmustern (331) und der Mehrzahl von vertikalen Elektrodenmustern (321) in der selben Richtung frei liegen, wodurch die horizontalen Kontaktanschlüsse (333) von einem der gegenüber liegenden Abschnitte des horizontalen Elektrodenmusters (331) in der vertikalen Richtung hervorstehen und sich derart erstrecken, dass sie mit den horizontalen Elektrodenmustern (331) nicht in Kontakt kommen können und über die Mehrzahl von Kontaktanschlüssen (323, 333) jeweils mit der Mehrzahl von horizontalen Verbindungsmustern (335) und der Mehrzahl von vertikalen Verbindungsmustern (325) verbunden sind.

2. Berührungstafel nach Anspruch 1, wobei eine Mehrzahl von Elektroden erzeugt wird, wo die Mehrzahl von horizontalen Elektrodenmustern (331) und die Mehrzahl von vertikalen Elektrodenmustern (321) sich überschneiden.

3. Berührungstafel nach Anspruch 2, wobei die Mehrzahl von horizontalen Verbindungsmustern (335) und die Mehrzahl von vertikalen Verbindungsmustern (325) jeweils abwechselnd angeordnet sind.

4. Berührungstafel nach Anspruch 1, wobei, wenn die Mehrzahl von horizontalen Elektrodenmustern (331) sich in einer anderen Richtung als der selben Richtung erstrecken, die Mehrzahl von Kontaktanschlüsseen (333) sich von der Mehrzahl von horizontalen Elektrodenmustern (331) in Bezug auf wenigstens eines aus der Mehrzahl von horizontalen Elektrodenmustern (331) in eine gegenüber liegenden Richtung erstreckt.

5. Berührungstafel nach Anspruch 4, wobei, wenn die Mehrzahl von vertikalen Elektrodenmustern (321) sich in der selben Richtung erstrecken, die Mehrzahl von Kontaktanschlüssen (323) sich von der Mehrzahl von vertikalen Elektrodenmustern (321) in Bezug auf wenigstens eines aus der Mehrzahl von vertikalen Elektrodenmustern (331) in die selbe Richtung erstreckt.

6. Berührungstafel nach einem der vorstehenden Ansprüche, wobei die Platte (330) mit horizontalen Elektroden und die Platte (320) mit vertikalen Elektroden derart gestapelt sind, dass eine auf der anderen liegt.

7. Berührungstafel nach einem der vorstehenden Ansprüche, die weiterhin umfasst:
eine Hauptplatine zur Erfassung von Berührungen über wenigsten eine aus der Mehrzahl von horizontalen Elektrodenmustern (331) und der Mehrzahl von vertikalen Elektrodenmustern (321), wobei die Hauptplatine mit der Mehrzahl von horizontalen Verbindungsmustern (335) und der Mehrzahl von vertikalen Verbindungsmustern (325) in der selben Richtung verbunden ist.

8. Berührungstafel nach Anspruch 3, wobei die Mehrzahl von horizontalen Verbindungsmustern (335) und die Mehrzahl von vertikalen Verbindungsmustern (325) jeweils abwechselnd angeordnet sind, so dass die Mehrzahl von horizontalen Verbindungsmustern (335) sich jeweils zwischen der Mehrzahl von vertikalen Verbindungsmustern (325) erstreckt und umgekehrt.

9. Berührungstafel nach Anspruch 3, wobei die Mehrzahl von Kontaktanschlüssen weiterhin umfasst:
eine Mehrzahl von vertikalen Kontaktanschlüssen (323), die sich von der Mehrzahl von vertikalen Elektrodenmustern (321) erstreckt; und
eine Mehrzahl von horizontalen Kontaktanschlüssen (333), die sich von der Mehrzahl von horizontalen Elektrodenmustern (331) erstreckt.

10. Berührungstafel nach Anspruch 10, wobei die Mehrzahl von vertikalen Kontaktanschlüssen (323) jeweils zwischen der Mehrzahl von horizontalen Elektrodenmustern (331) angeordnet ist und umgekehrt.

11. Berührungstafel nach Anspruch 10, wobei die Mehrzahl von Verbindungsmustern (325, 335) weiterhin eine Gruppe von Verbindungsanschlüssen (327, 337) umfasst,
wobei die Gruppe von Kontaktanschlüssen eine Gruppe von vertikalen Verbindungsanschlüssen (327) und eine Gruppe von horizontalen Verbindungsanschlüssen (337) umfasst, und
wobei die Gruppe von vertikalen Verbindungsanschlüssen (327) jeweils zwischen der Gruppe von horizontalen Verbindungsanschlüssen (331) angeordnet ist und umgekehrt.

12. Mobiles Gerät, das umfasst:
eine Anzeigetafel zum Anzeigen eines Videos mittels Licht; und
eine Berührungstafel nach einem der vorstehenden Ansprüche, die in der Anzeigetafel installiert ist, um Licht durchzulassen und Berührungen zu erfassen.

## Revendications

1. Écran tactile comprenant :
une plaque d'électrodes (313) comportant une plaque d'électrodes horizontales (330), sur laquelle une pluralité de motifs d'électrodes horizontaux (331) sont formés en s'étendant dans un sens horizontal et sont ordonnés dans un sens vertical, et une plaque d'électrodes verticales (320), sur laquelle une pluralité de motifs d'électrodes verticaux (321) s'étendent dans le sens vertical et sont ordonnés dans le sens horizontal, et
une pluralité de motifs de connexion (325, 335) comportant une pluralité de motifs de connexion horizontaux (335) qui s'étendent à partir de la pluralité de motifs d'électrodes horizontaux (331) dans un même sens dans la plaque d'électrodes horizontales (330), et une pluralité de motifs de connexion verticaux (325) qui s'étendent à partir de la pluralité de motifs d'électrodes verticaux (321) dans le même sens que la pluralité de motifs de connexion horizontaux (335) dans la plaque d'électrodes verticales (320) ;
dans lequel la pluralité de motifs d'électrodes horizontaux (331) et la pluralité de motifs d'électrodes verticaux (321) comprennent en outre respectivement une pluralité de bornes de contact (323, 333) qui s'étendent pour être exposées à l'extérieur de la pluralité de motifs d'électrodes horizontaux (331) et de la pluralité de motifs d'électrodes verticaux (321) dans le même sens, moyennant quoi les bornes de contact horizontales (333) font saillie à partir d'une des parties opposées du motif d'électrode horizontal (331) dans le sens vertical et s'étendent de manière à ne pas pouvoir toucher les motifs d'électrodes horizontaux (331) et se connectent à la pluralité de motifs de connexion horizontaux (335) et la pluralité de motifs de connexion verticaux (325) respectivement par le biais de la pluralité de bornes de contact (323, 333).

2. Écran tactile selon la revendication 1, dans lequel une pluralité d'électrodes sont créées là où la pluralité de motifs d'électrodes horizontaux (331) et la pluralité de motifs d'électrodes verticaux (321) se coupent.

3. Écran tactile selon la revendication 2, dans lequel la pluralité de motifs de connexion horizontaux (335) et la pluralité de motifs de connexion verticaux (325) sont ordonnés alternativement et respectivement.

4. Écran tactile selon la revendication 1, dans lequel, lorsque la pluralité de motifs d'électrodes horizontaux (331) s'étendent dans un sens différent à partir du même sens, la pluralité de bornes de contact (333) s'étendent à partir de la pluralité de motifs d'électrodes horizontaux (331) vers un sens opposé par rapport à au moins un parmi la pluralité de motifs d'électrodes horizontaux (331).

5. Écran tactile selon la revendication 4, dans lequel, lorsque la pluralité de motifs d'électrodes verticaux (321) s'étendent dans le même sens, la pluralité de bornes de contact (323) s'étendent à partir de la pluralité de motifs d'électrodes verticaux (321) dans un même sens par rapport à au moins un parmi la pluralité de motifs d'électrodes verticaux.

6. Écran tactile selon l'une quelconque des revendications, dans lequel la plaque d'électrodes horizontales (320) et la plaque d'électrodes verticales (330) sont empilées de manière à être l'une sur l'autre.

7. Écran tactile selon l'une quelconque des revendications précédentes, comprenant en outre :
une carte principale destinée à capter les commandes tactiles par le biais d'au moins un parmi la pluralité de motifs d'électrodes horizontaux (331) et la pluralité de motifs d'électrodes verticaux (321), la carte principale se connectant à la pluralité de motifs de connexion horizontaux (335) et la pluralité de motifs de connexion verticaux (325) dans le même sens.

8. Écran tactile selon la revendication 3, dans lequel la pluralité de motifs de connexion horizontaux (335) et la pluralité de motifs de connexion verticaux (325) sont ordonnés alternativement et respectivement de manière que la pluralité de motifs de connexion horizontaux (335) s'étendent respectivement entre la pluralité de motifs de connexion verticaux (325), et vice versa.

9. Écran tactile selon la revendication 3, dans lequel la pluralité de bornes de contact comprennent en outre :
une pluralité de bornes de contact verticales (323) qui s'étendent à partir de la pluralité de motifs d'électrodes verticaux (321), et
une pluralité de bornes de contact horizontales (333) qui s'étendent à partir de la pluralité de motifs d'électrodes horizontaux (331).

10. Écran tactile selon la revendication 10, dans lequel la pluralité de bornes de contact verticales (323) sont respectivement ordonnées entre la pluralité de bornes de contact horizontales (333), et vice versa.

11. Écran tactile selon la revendication 10, dans lequel la pluralité de motifs de connexion (325, 335) comprennent en outre un groupe de bornes de connexion (327, 337),
dans lequel le groupe de bornes de connexion comprend un groupe de bornes de connexion verticales (327) et un groupe de bornes de connexion horizontales (337), et
dans lequel le groupe de bornes de connexion verticales (327) est respectivement intercalé avec le groupe de bornes de connexion horizontales (337), et vice versa.

12. Appareil mobile comprenant :
un écran de visualisation permettant de présenter une vidéo par le biais de la lumière, et
un écran tactile selon l'une quelconque des revendications précédentes, installé sur l'écran de visualisation et destiné à laisser passer la lumière et à capter les commandes tactile.
